# EUROPEAN PATENT SPECIFICATION

(11) **EP 0 535 938 B1**
(45) Date of publication and mention of the grant of the patent: **08.05.1996**
(21) Application number: 92308926.2
(22) Date of filing: 30.09.1992
(51) Int. Cl.: B60C 15/00

(54) **Pneumatic radial tyre**
Radialer Luftreifen
Bandage pneumatique radial

(30) Priority: 30.09.1991 JP 278380/91
(43) Date of publication of application: 07.04.1993
(73) Proprietor: SUMITOMO RUBBER INDUSTRIES LIMITED, Chuo-ku Kobe-shi Hyogo 651 (JP)
(72) Inventor: Adachi, Yukishige, Akashi-shi, Hyogo (JP)
(74) Representative: Stewart, Charles Geoffrey

(56) References cited:
- DE-A- 3 242 323
- DE-A- 3 314 563
- FR-A- 1 355 014
- GB-A- 1 003 580
- PATENT ABSTRACTS OF JAPAN vol. 012, no. 437 (M-765)17 November 1988 & JP-A-63 170 109 (BRIDGESTONE CORP.) 14 July 1988
- PATENT ABSTRACTS OF JAPAN vol. 014, no. 418 (M-1022)10 September 1990 & JP-A-21 62 102 (THE YOKOHAMA RUBBER CO. LTD.) 21 June 1990
- PATENT ABSTRACTS OF JAPAN vol. 014, no. 228 (M-973)15 May 1990 & JP-A-20 57 410 (OKAMOTO IND. INC.) 27 February 1990

## Description

Radial tyres are far superior to bias tyres in many aspects including fuel economy, life (endurance) and vehicle manoeuvrability, and today radial tyres dominate the market of pneumatic tyres.

A pneumatic radial tyre comprises an annular tread portion, a pair of sidewalls that extend from both edges of the tread portion in the radial direction of the tyre, a pair of bead portions provided at the end of each sidewall to engage a wheel rim on which the tyre is to be mounted in use, a carcass reinforcement layer composed of cords arranged in the radial direction of the tyre and having both ends engaged in the bead portions and extending through both sidewall portions and the tread portion and breaker layers of high rigidity arranged in the external radial part of the carcass layer to reinforce the tread.

The carcass of radial passenger tyres which are generally required to provide high vehicle manoeuvrability is composed of two plies in order to provide the necessary enhanced lateral rigidity. As recent models of vehicles are designed to run with higher fuel efficiency, the requirements for lighter tyres have become more rigorous than ever before. Using a smaller number of plies in the carcass is effective in reducing a substantial portion of the tyre weight, for example, a changeover from two-ply to one-ply carcass is effective in reducing a substantial portion of the tyre weight but, at the same time, the lateral rigidity of the tyre is lowered which impairs vehicle manoeuvrability and in particular, its cornering performance.

A tyre according to the preamble of claim 1 is known from DE-A-3 242 323.

An object of the present invention is to provide a pneumatic radial tyre that has the carcass layer composed of a single ply of carcass cords to reduce the tyre weight and improve the tyre production rate and which ensures a sufficiently high lateral spring constant to maintain good manoeuvrability.

According to one aspect of the present invention a pneumatic radial tyre comprises an annular tread member, a pair of sidewalls extending from opposite edges of the tread portion in the radial direction of the tyre, a pair of bead members provided one at each end of the sidewalls and each of which has a bead core embedded therein and a pair of bead apexes of gradually reducing thickness toward a maximum tyre width; a carcass layer having reinforcement cords arranged in the radial direction of the tyre, said carcass layer extending through both sidewalls and under said tread member, and breaker layers arranged radially outwards of the carcass layer, said carcass layer being formed of a single ply of carcass cords folded around each bead core at each edge of the carcass in such a way that the edges or tips of the turnups extend to a position below said breaker layers characterised in that a rubber layer is provided between the main carcass body and said turnups such that the said rubber layer extends from below said breaker layers and terminates at an upper end of a respective bead apex.

Preferably the thickness of the rubber layer is greater than but less than 10 times the diameter of each carcass cord and the rubber has a hardness of 60 to 100 degrees.

Alternatively or in addition the rubber layer includes a fibre reinforcement of short fibres. The amount of fibres may be 5 to 15% by weight and they may be aligned at no more than 45 degrees with respect to the carcass cord direction. Suitable fibre materials are nylon, vinyl, rayon or aramid (Kevlar).

Further aspects of the invention will now be described by way of example only in conjunction with the attached diagrammatic drawings in which:-
Figure 1 shows in partial cross-section a pneumatic radial tyre of an embodiment of the present invention; and
Figure 2 is a cross-section of Figure 1 as taken on line II-II of Figure 2.

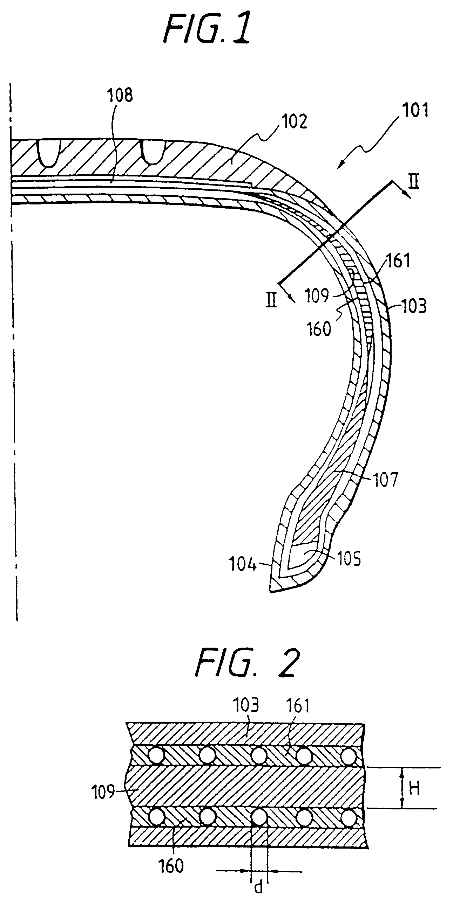

Figure 1 shows in partial cross-section an embodiment of a pneumatic radial tyre of the present invention. As shown, the pneumatic radial tyre generally indicated by 101 comprises an annular tread portion 102, a pair of sidewalls 103 which extend from opposite edges of the tread portion 102 in the radial direction of the tyre, a pair of bead portions 104 that are provided at the internal radial ends of each sidewall 103 and each of which has an annular bead core 105 embedded therein, a single-ply carcass layer 106 that is composed of carcass cords arranged in the radial direction of the tyre as they are folded around the bead core 105 at each end and which extend through both sidewalls 103 and under the tread portion 102, bead apexes 107 that are made of hard rubber having a Shore A hardness of 52 to 100 degrees (50 to 100 degrees JISA) and which are arranged in the external radial parts of the bead cores 105, and a breaker layer 108 composed of two or more plies that are arranged in the external radial part of the carcass layer 106 and each of which is comprises an array of parallel breaker cords formed by twisting steel filaments together.

The carcass 106 is folded around the bead core 105 at each edge and the top edge or tip of each turnup 161 extends to a position below the edge of breaker layer 108, namely to a position where said tip lies just beneath the breaker layer 108 within the range defined by the width B of said breaker layer 108.

Because of this structure, the carcass 106 can effectively be regarded as consisting of two plies in the sidewalls 103 and the bending rigidity of the carcass 106 in an area that extends from the buttress portion which absorbs the deflection of the tyre when the tyre is placed under load to the position of a maximum width is increased satisfactorily. However, the tyre is only a single ply construction under the tread.

Optionally the sidewall portions 103 are formed of a fibre-reinforced rubber (FRR) that is a rubber containing short fibres of such polymers as nylon, vinyl, rayon or aramid such as Kevlar that are present in an amount of 5 to 15% (by weight) and which are aligned at an angle of no more than 45 degrees (desirably parallel or zero degrees) with respect to the tangent of the carcass cords, said FRR having a Shore A hardness of 73 to 93 degrees (70 to 90 degrees JISA). If the content of short fibres is less than 5%, the rigidity of the sidewall portions 3 is not sufficiently enhanced, if their content is more than 15%, the rubber cannot be extrusion moulded. If the short fibres are aligned at an angle exceeding 45 degrees with respect to the tangent to the carcass, the rigidity to a lateral displacement that will occur when the pneumatic radial tyre 101 is placed under load cannot be sufficiently enhanced to help improve the lateral spring constant of the tyre.

A rubber layer 109 made of a rubber having a Shore A hardness of 62 to 100 degrees (60 to 100 degrees JISA) is provided between the main body 160 of the carcass 106 (extending between the two bead cores 105) and each turnup 161. This rubber layer 109 is such that its upper edge is located beneath the breaker layer 108 whereas its lower edge extends to the maximum width position where the tyre width W is at a maximum. If the upper end of either bead apex 107 does not reach the maximum width position, the lower end of the rubber 109 is so designed as to reach the upper end of the bead apex 107.

This structure is effective in further enhancing the bending rigidity of the sidewalls 103 in the areas that extend from the buttress portion to the maximum width position, whereby a good lateral spring constant is ensured to provide good vehicle manoeuvrability, in particular high cornering performance.

The thickness H of the rubber layer 109 is greater than the diameter d of each carcass cord in the carcass 106 but smaller than 10 times the diameter d of each carcass cord (see Figure 2). If the thickness H of the rubber layer 109 is smaller than the diameter d of each carcass cord, the bending rigidity of the sidewalls 103 cannot be adequately enhanced. If the thickness H of the rubber layer 109 is greater than 10 times the diameter d of each carcass cord, the portion of interest will have such a high bending rigidity that it will experience less deflection, accompanied by impaired initial response to lateral displacement.

In a preferred embodiment, the rubber layer 109 may be formed of a fibre-reinforced rubber (FRR) that contains short fibres of such polymers as nylon, vinylon, rayon of aramid (Kevlar) to provide higher strength and hardness. This is particularly effective in enhancing the bending rigidity of the sidewalls 103 without increasing the thickness H of the rubber layer 109.

A tyre sample was constructed in accordance with the present invention. In addition, samples of other tyre constructions were prepared as set forth below. Experiments were conducted on those tyre samples and the results are shown in Table 1.

Example I was constructed in accordance with the present invention with its carcass layer having a single ply of carcass cords and each of its turnups was caused to extend to a position below the breaker layer, with a rubber layer being provided between the carcass body and each turnup; the rubber layer had a thickness H of 7mm (H>10d) and a length around the tyre section of 50mm.

Example II was the same as Example I except that the thickness H of the rubber layer was decreased to 3mm.

Example III was the same as Example II except that the sidewall was made of the same material as the rubber layer.

Comparative Example I was a conventional tyre using a two-ply carcass layer, in which the edge of each turnup of the carcass located externally was positioned at the position of maximum tyre width.

Comparative Example II was such that the carcass layer was formed of a single ply of carcass cords, with the edge of each turnup of the carcass being positioned at the position of a maximum tyre width.

Comparative Example III was such that the carcass layer was formed of a singly ply of carcass cords, with the edge of each turnup being extended to a position just below the breaker layer but without providing a rubber layer between the carcass body and each turnup.

Each tyre sample had a size of 195/65R15 with the diameter (d) of each carcass cord being 0.68mm.

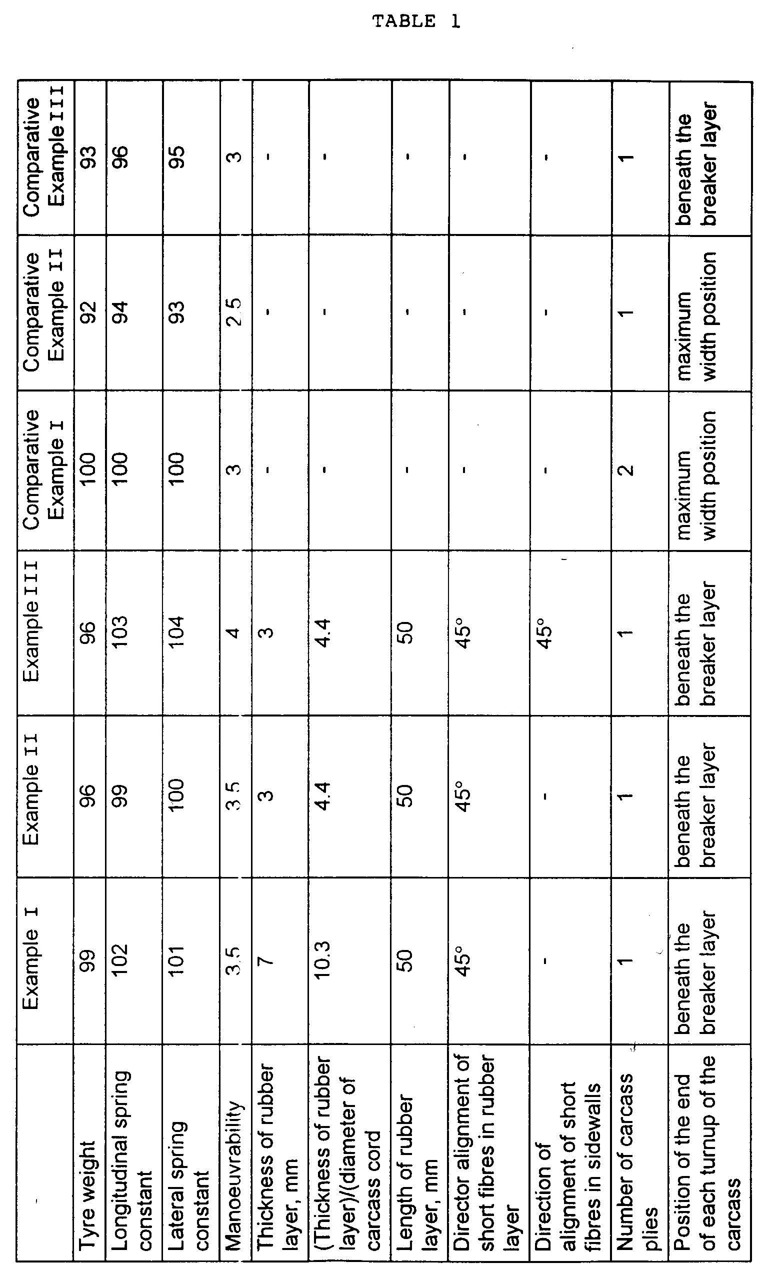

In Table 1, the values of tyre weight, longitudinal spring constant and lateral spring constant are shown in terms of indices with the values for the prior art sample (Comparative Example I) set at 100. Initial response and cornering performance were evaluated by a subjective outdoor-track test in which a domestic passenger car having a piston displacement of 2,000 cc equipped with one of the five tyre samples was run on a proving ground; the higher the values, the better the performance.

As one can see from Table 1, the use of a single-ply carcass layer was effective in reducing tyre weight, however, the lateral spring constant decreased so much as to deteriorate the manoeuvrability of the tyre (Comparative Example II). When the edge of each turnup of the carcass layer was extended to a position beneath the breaker layer, the drop in lateral spring constant was sufficiently suppressed to prevent the deterioration of manoeuvrability (Comparative Example III).

In Example II, the end of each turnup of the single-ply carcass layer was extended to a position below the breaker layer and the rubber layer having a thickness (H) of 3mm and a length of 50mm was provided between the carcass body and each turnup, this tyre gas lighter in weight and yet the lateral spring constant was maintained at a sufficiently high level to provide good manoeuvrability.

In Example I, the thickness (H) of the rubber layer between the carcass body and each turnup was greater than 10 times the diameter (d) of each carcass cord (H>10d); this tyre was heavy and the longitudinal spring constant increased to cause poor ride characteristics.

The present invention is thus capable of reducing the weight of a pneumatic radial tyre; at the same time, it ensures a high enough lateral spring constant to provide good manoeuvrability, in particular, high cornering performance.

## Claims

1. A pneumatic radial tyre comprising an annular tread member (102), a pair of sidewalls (103) extending from opposite edges of the tread portion (102) in the radial direction of the tyre, a pair of bead members (104) provided one at each end of the sidewalls and each of which has a bead core (105) embedded therein and a pair of bead apexes (107) of gradually reducing thickness toward a maximum tyre width; a carcass layer (160) having reinforcement cords arranged in the radial direction of the tyre, said carcass layer (160) extending through both sidewalls (103) and under said tread member (102), and breaker layers (108) arranged radially outwards of the carcass layer, said carcass layer (160) being formed of a single ply of carcass cords folded around each bead core (105) at each edge of the carcass in such a way that the edges or tips of the turnups extend to a position below said breaker layers (108), characterised in that a rubber layer (109) is provided between the main carcass body (160) and said turnups such that the said rubber layer (109) extends from below said breaker layers (108) and terminates at an upper end of a respective bead apex (107).

2. A pneumatic radial tyre according to claim 1 characterised in that the thickness of said rubber layer (109) is greater than the diameter (d) of each carcass cord but smaller than 10 times the diameter of each carcass cord and said rubber layer has a hardness of 62 to 100 degrees Shore A (60 to 100 degrees JISA).

3. A pneumatic radial tyre according to claim 1 or 2 characterised in that said rubber layer (109) is formed of a fibre-reinforced rubber containing short fibres.

4. A pneumatic radial tyre according to claim 3 characterised in that said short fibres are in an amount of 5 to 15% by weight, and are aligned at an angle of no more than 45 degrees with respect to the tangent to the carcass cords, and the rubber has a hardness of 73 to 93 degrees Shore A (70 to 90 degrees JISA).

5. A pneumatic radial tyre according to any one of claims 1 to 4 characterised in that the sidewalls (103) are formed of a fibre-reinforced rubber containing short fibres in an amount of 5 to 15% by weight, and said short fibres are aligned at an angle of no more than 45 degrees with respect to the tangent to the carcass, and the rubber has a hardness of 73 to 93 degrees Shore A (70 to 90 degrees JISA).

6. A pneumatic radial tyre according to any of claims 3 to 5 characterised in that the short fibres are fibres of nylon, vinyl, rayon or aramid (Kevlar).

## Patentansprüche

1. Ein Luftradialreifen mit einem ringförmigen Laufflächenglied (102), einem Paar Seitenwände (103), die sich von gegenüberliegenden Kanten des Laufflächenteils (102) in der Radialrichtung des Reifens erstrecken, einem Paar Wulstglieder (104), wovon eines an jedem Ende der Seitenwände vorgesehen ist, und jedes davon einen Wulstkern (105), der darin eingebettet ist, und ein Paar Wulstkernreiter (107) mit allmählich abnehmender Dicke auf eine maximale Reifenbreite zu aufweist; einer Karkassenschicht (160) mit Verstärkungscorden, die in der Radialrichtung des Reifens angeordnet sind, wobei die Karkassenschicht (160) sich durch beide Seitenwände (103) und unter dem Laufflächenglied (102) erstreckt, und Breakerschichten (108), die radial außerhalb der Karkassenschicht angeordnet sind, wobei die Karkassenschicht (160) aus einer einzigen Lage von Karkassencorden gebildet ist, die um jeden Wulstkern (105) an jeder Kante der Karkasse derart gefaltet sind, daß die Kanten oder Spitzen der Umschläge sich zu einer Position unterhalb der Breakerschichten (108) erstrecken,
dadurch **gekennzeichnet,**
daß eine Gummischicht (109) zwischen dem Hauptkarkassenkörper (160) und den Umschlägen so vorgesehen ist, daß die Gummischicht (109) sich von unter den Breakerschichten (108) aus erstreckt und an einem oberen Ende eines jeweiligen Wulstkernreiters (107) endet.

2. Ein Luftradialreifen nach Anspruch 1,
dadurch **gekennzeichnet,**
daß die Dicke der Gummischicht (109) größer als der Durchmesser (d) von jedem Karkassencord, aber kleiner als das 10-fache des Durchmessers von jedem Karkassencord ist, und die Gummischicht eine Härte von 62 bis 100 Grad Shore A (60 bis 100 Grad JISA) aufweist.

3. Ein Luftradialreifen nach Anspruch 1 oder 2,
dadurch **gekennzeichnet,**
daß die Gummischicht (109) aus einem faserverstärkten Gummi gebildet ist, der kurze Fasern enthält.

4. Ein Luftradialreifen nach Anspruch 3,
dadurch **gekennzeichnet,**
daß die kurzen Fasern in einem Ausmaß von 5 bis 15 Gewichts-% vorgesehen und unter einem Winkel von nicht mehr als 45 Grad bezüglich der Tangente an die Karkassencorde ausgerichtet sind und der Gummi eine Härte von 73 bis 93 Grad Shore A (70 bis 90 Grad JISA) aufweist.

5. Ein Luftradialreifen nach einem der Ansprüche 1 bis 4,
dadurch **gekennzeichnet,**
daß die Seitenwände (103) aus einem faserverstärkten Gummi gebildet sind, der kurze Fasern in einem Ausmaß von 5 bis 15 Gewichts-% enthält, und die kurzen Fasern unter einem Winkel von nicht mehr als 45 Grad bezüglich der Tangente an die Karkasse ausgerichtet sind und der Gummi eine Härte von 73 bis 93 Grad Shore A (70 bis 90 Grad JISA) aufweist.

6. Ein Luftradialreifen nach einem der Ansprüche 3 bis 5,
dadurch **gekennzeichnet,**
daß die kurzen Fasern Fasern aus Nylon, Vinyl, Reyon oder Aramid (Kevlar) sind.

## Revendications

1. Pneumatique à carcasse radiale comprenant un organe annulaire (102) de bande de roulement, deux flancs (103) partant des bords opposés de la partie (102) de bande de roulement dans la direction radiale du pneumatique, deux organes (104) de talon placés chacun à une extrémité d'un flanc et ayant chacun une tringle (105) qui est enrobée, et deux pointes de bourrage de talon (107) ayant une épaisseur qui diminue progressivement vers un emplacement de largeur maximale du pneumatique, une couche (160) de carcasse ayant des câblés d'armature placés dans la direction radiale du pneumatique, la couche de carcasse (160) étant disposée dans les deux flancs (103) et sous l'organe de bande de roulement (102), et des couches (108) de nappes sommet placées radialement à l'extérieur de la couche de carcasse, la couche de carcasse (160) étant formée d'une seule nappe de câblés de carcasse repliée autour de chaque tringle (105) à chaque bord de la carcasse de manière que les bords ou bouts des parties repliés rejoignent une position qui se trouve sous les couches (108) de nappes sommet, caractérisé en ce qu'une couche (109) de caoutchouc est placée entre le corps principal (160) de la carcasse et les parties repliées de manière que la couche de caoutchouc (109) parte sous les couches (108) de nappes sommet et se termine à une extrémité supérieure d'une pointe respective de bourrage de talon (107).

2. Pneumatique à carcasse radiale selon la revendication 1, caractérisé en ce que l'épaisseur de la couche de caoutchouc (109) est supérieure au diamètre (d) de chaque câblé de carcasse, mais inférieure à dix fois le diamètre de chaque câblé de carcasse, et la couche de caoutchouc a une dureté comprise entre 62 et 100° Shore A (60 à 100° JISA).

3. Pneumatique à carcasse radiale selon la revendication 1 ou 2, caractérisé en ce que la couche de caoutchouc (109) est formée d'un caoutchouc armé de fibres contenant de courtes fibres.

4. Pneumatique à carcasse radiale selon la revendication 3, caractérisé en ce que les courtes fibres sont en quantité comprise entre 5 et 15 % en poids et sont alignées suivant un angle qui ne dépasse pas 45° par rapport à la tangente aux câblés de la carcasse, et le caoutchouc a une dureté comprise entre 73 et 93° Shore A (70 à 90° JISA).

5. Pneumatique à carcasse radiale selon l'une quelconque des revendications 1 à 4, caractérisé en ce que les flancs (103) sont formés de caoutchouc armé de fibres contenant de courtes fibres en quantité comprise entre 5 et 15 % en poids, et les courtes fibres sont alignées suivant un angle ne dépassant pas 45° par rapport à la tangente de la carcasse, et le caoutchouc a une dureté comprise entre 73 et 93° Shore A (70 à 90° JISA).

6. Pneumatique à carcasse radiale selon l'une quelconque des revendications 3 à 5, caractérisé en ce que les courtes fibres sont des fibres de "Nylon", vinyle, rayonne ou aramide ("Kevlar").
